# EUROPEAN PATENT APPLICATION

(11) **EP 4 712 185 A1**
(43) Date of publication of application: **18.03.2026**
(21) Application number: 25200761.2
(22) Date of filing: 08.09.2025
(51) Int. Cl.: H01M 10/04, H01M 50/107, H01M 50/595

(54) **TAPE ATTACHING DEVICE AND METHOD AND SYSTEM FOR MANUFACTURING A CYLINDRICAL BATTERY**

(30) Priority: 11.09.2024 KR 20240124120
(71) Applicant: SAMSUNG SDI CO., LTD., Yongin-si, Gyeonggi-do 17084 (KR)
(72) Inventor: Daeseong, Jeong, 17084 Yongin-si, Gyeonggi-do (KR); Myunghwan, Seo, 17084 Yongin-si, Gyeonggi-do (KR); Baek, Junho, 17084 Yongin-si, Gyeonggi-do (KR); Uhm, Jushik, 17084 Yongin-si, Gyeonggi-do (KR)
(74) Representative: Meissner Bolte Partnerschaft mbB

(57) **Abstract**

A tape attaching device (200) including: a lower support structure (210) to support a cylindrical electrode assembly (110); a plurality of compression jigs (220) to bend an insulating tape (120) attached to a side surface (112) of the electrode assembly (110) and protruding in a height direction along a circumference of an upper surface (114) of the electrode assembly (110), and attach the insulating tape (120) to the upper surface (114) of the electrode assembly (110); a pressing device (230) to flatten the upper surface (114) of the electrode assembly (110) to which the insulating tape (120) is attached; and a controller (240) to control the compression jigs (220) and the pressing device (230).

## Description

The present invention relates to a tape attaching device and method, and a system for manufacturing a cylindrical battery.

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

For large-diameter cells, the secondary battery includes an insulating plate interposed between the electrode assembly and the bottom surface of the case.

The above information disclosed in this Background section is for enhancement of understanding of the background of the present invention, and therefore, it may contain information that does not constitute related (or prior) art.

### SUMMARY

The insulating plate serves to electrically insulate the positive electrode and the negative electrode from each other. However, because there may be an uninsulated portion on an outer portion of the insulating plate, there may be a possibility of an electrical short occurring between the positive electrode substrate and the case functioning as the negative electrode. As such, a measure to prevent such an electrical short may be desired.

The present invention is directed to a tape attaching device and a method, and a system for manufacturing a cylindrical battery while reducing or minimizing a possibility of an electrical short from occurring.

These and other aspects and features of the present invention will be described in or will be apparent from the following description of embodiments of the present invention.

According to one aspect of the present invention, a tape attaching device includes: a lower support structure configured to support a cylindrical electrode assembly; a plurality of compression jigs configured to bend an insulating tape attached to a side surface of the electrode assembly and protruding in a height direction along a circumference of an upper surface of the electrode assembly, and attach the insulating tape to the upper surface of the electrode assembly; a pressing device configured to flatten the upper surface of the electrode assembly to which the insulating tape is attached; and a controller configured to control the compression jigs and the pressing device.

In an embodiment, the compression jigs may include a pair of first jigs facing each other, and a pair of second jigs facing each other; the pair of first jigs may be located at the same height as each other; and the pair of second jigs may be located at the same height as each other.

In an embodiment, the pair of first jigs and the pair of second jigs may be located at the same height as each other.

In an embodiment, the pair of first jigs may be located at a different height from the pair of second jigs.

In an embodiment, a separation distance between the pair of first jigs and the pair of second jigs in a vertical direction may be within 1 mm.

In an embodiment, end portions of lower surfaces of the compression jigs facing the upper surface of the electrode assembly may be inclined toward one ends thereof.

In an embodiment, end portions of the compression jigs may have an isosceles triangle shape, and a horizontal width of the compression jigs may be 95% to 105% of a length of one side of a regular octagon inscribed in the upper surface of the electrode assembly.

In an embodiment, the compression jigs may be configured to be moved between a backward position and a forward position; end portions of the compression jigs may contact around a diameter of an imaginary circle at the forward position; and the diameter of the imaginary circle may be smaller than an outer diameter of the electrode assembly.

In an embodiment, the compression jigs may be configured to be moved between a backward position and a forward position; end portions of the compression jigs may contact around a diameter of an imaginary circle at the backward position; and the diameter of the imaginary circle may be larger than an outer diameter of the electrode assembly.

In an embodiment, the lower support structure may include a buffer member, or the pressing device may include a buffer member.

In an embodiment, the insulating tape may include: a first region attached to the side surface of the electrode assembly; and a second region protruding in the height direction of the electrode assembly; and the controller may be configured to: move the compression jigs from a backward position to a forward position to bend the second region of the insulating tape along the circumference of the upper surface of the electrode assembly; and lower the compression jigs to attach the second region of the insulating tape that is bent to the upper surface of the electrode assembly.

In an embodiment, the controller may be configured to raise the compression jigs, rotate the compression jigs or the lower support structure at an angle, and then lower the compression jigs.

According to a second aspect of the present invention, a method for attaching a tape includes: disposing a cylindrical electrode assembly on a lower support structure; attaching a first region of an insulating tape to a side surface of the electrode assembly; bending, by a plurality of compression jigs, a second region of the insulating tape protruding in a height direction of the electrode assembly along a circumference of an upper surface of the electrode assembly, and attaching the insulating tape to the upper surface of the electrode assembly; and flattening, by a pressing device, the upper surface of the electrode assembly to which the insulating tape is attached.

In an embodiment, the bending and attaching may include: moving the compression jigs from a backward position to a forward position to bend the second region of the insulating tape along the circumference of the upper surface of the electrode assembly; and attaching the second region of the bent tape to the upper surface of the electrode assembly by lowering the compression jigs.

In an embodiment, end portions of the compression jigs may contact around a diameter of an imaginary circle at the backward position; and the diameter of the imaginary circle may be larger than an outer diameter of the electrode assembly.

In an embodiment, the compression jigs may include a pair of first jigs facing each other, and a pair of second jigs facing each other; the pair of first jigs may be located at the same height as each other; the pair of second jigs may be located at the same height as each other; the pair of first jigs may be located at a different height from the pair of second jigs; and a separation distance between the pair of first jigs and the pair of second jigs in a vertical direction may be within 1 mm.

In an embodiment, the bending and attaching may further include: rotating the compression jigs or the lower support structure at an angle after the compression jigs are raised; and lowering the compression jigs.

In an embodiment, end portions of the compression jigs may have an isosceles triangle shape; and a horizontal width of the compression jigs may be 95% to 105% of a length of one side of a regular octagon inscribed in the upper surface of the electrode assembly.

In an embodiment, the compression jigs may include a pair of first jigs facing each other, and a pair of second jigs facing each other; and the pair of first jigs and the pair of second jigs may be located at the same height as each other.

According to a third aspect of the present invention, a cylindrical battery manufacturing system includes: a first device configured to provide a cylindrical electrode assembly including a first electrode, a second electrode, and a separator between the first electrode and the second electrode; a second device configured to attach an insulating tape to the electrode assembly; and a third device configured to insert the electrode assembly to which the insulating tape is attached into a housing having an opening. The second device includes: a lower support structure configured to support the electrode assembly; a plurality of compression jigs configured to: bend the insulating tape attached to a side surface of the electrode assembly and protruding in a height direction along a circumference of an upper surface of the electrode assembly; and attach the insulating tape to the upper surface of the electrode assembly; a pressing device configured to flatten the upper surface of the electrode assembly to which the insulating tape is attached; and a controller configured to control the first device, the second device, and the third device.

According to one or more embodiments of the present invention, a secondary battery includes: a cylindrical electrode assembly; and an insulating tape attached to the electrode assembly by a tape attaching device comprising: a lower support structure configured to support the cylindrical electrode assembly; a plurality of compression jigs configured to bend the insulating tape attached to a side surface of the electrode assembly and protruding in a height direction along a circumference of an upper surface of the electrode assembly, and attach the insulating tape to the upper surface of the electrode assembly; a pressing device configured to flatten the upper surface of the electrode assembly to which the insulating tape is attached; and a controller configured to control the compression jigs and the pressing device.

In an embodiment, the insulating tape may include: a first region attached to the side surface of the electrode assembly; and a second region bent inward from the circumference of the upper surface of the electrode assembly, and attached to the upper surface. The second region may include a plurality of wrinkles continuously located along the circumference of the upper surface of the electrode assembly, and the first region of the insulating tape may be free of wrinkles.

In a comparative secondary battery, an outer portion of the insulating plate on the bottom surface inside the can may have an uninsulated area of approximately 1.5 mm on one side. This may cause the positive electrode substrate or the positive electrode current collector plate to contact the negative electrode portion of the can, resulting in a short circuit.

According to some embodiments of the present invention, the risk of exposure of the substrate and the current collector plate may be eliminated, minimized, or reduced by attaching the insulating tape to completely surround (e.g., around a periphery of) the edge portion of the electrode assembly.

According to some embodiments of the present invention, because the first region of the insulating tape may be attached first, it may be possible to prevent or substantially prevent the formation of wrinkles on the side portion, enhance the ease of inserting the electrode assembly into the secondary battery case, and prevent or substantially prevent the pressing of the substrate on the outer portion of the electrode assembly. In addition, in the comparative secondary battery, the upper insulating tape attached to the upper surface of the insulating tape may pose a risk of substrate exposure due to cutting, and thus, making it important to attach the tape at the center of the upper surface of the electrode assembly. According to some embodiments, however, a side tape attachment method may be relatively free from the importance of such eccentricity.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention and further describe aspects and features of the present invention together with the detailed description of the present invention. Thus, the present invention should not be construed as being limited to the drawings.
FIG. 1 illustrates a flow diagram of an example of an electrode assembly to which a tape is attached according to an embodiment of the present invention.
FIG. 2 illustrates a block diagram of a configuration of a tape attaching device according to an embodiment of the present invention.
FIG. 3 illustrates a side view of a tape attaching device according to an embodiment of the present invention.
FIG. 4 illustrates a top view of a position state of a compression jig according to an embodiment of the present invention.
FIG. 5 illustrates a separation distance in a vertical direction between compression jigs according to an embodiment of the present invention.
FIG. 6 illustrates a projection view of an end shape of a compression jig according to an embodiment of the present invention.
FIG. 7 illustrates a flowchart of a method for attaching a tape using a compression jig according to an embodiment of the present invention.
FIG. 8 illustrates a view of an end portion of a compression jig according to an embodiment of the present invention.
FIG. 9 illustrates a view of a shape of a compression jig according to an embodiment of the present invention.
FIG. 10 illustrates an example of a compression jig according to an embodiment of the present invention.
FIG. 11 illustrates a flowchart of a method for attaching a tape using a compression jig according to an embodiment of the present invention.
FIG. 12 illustrates a perspective view of an example of a pressing device according to an embodiment of the present invention.
FIG. 13 illustrates a flowchart of a method for attaching a tape using a compression jig according to an embodiment of the present invention.
FIG. 14 illustrates a block diagram of a system for manufacturing a cylindrical battery according to an embodiment of the present invention.
FIG. 15 illustrates a top view example of an electrode assembly to which an insulating tape is attached by the tape attaching device according to an embodiment of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present invention, the sizes and relative sizes of the areas shown in the drawings may be exaggerated for clarity of description. In other words, the sizes shown in the drawings are for convenience of understanding and are not limited thereto. Throughout the specification, the same reference numerals denote the same constituent elements.

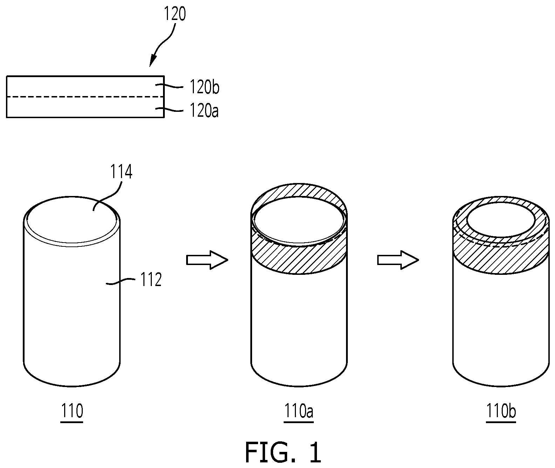

FIG. 1 illustrates a flow diagram of an example of an electrode assembly 110b to which a tape is attached according to an embodiment of the present invention.

Referring to FIG. 1, a secondary battery according to an embodiment may include an electrode assembly 110, a case accommodating the electrode assembly 110 and an electrolyte therein, a cap assembly coupled to an opening of the case to seal the case, and an insulating plate disposed between the electrode assembly 110 and the cap assembly inside the case. The electrode assembly 110 may include a first electrode and a second electrode disposed with a separator interposed therebetween. An insulating tape 120 may be attached to surround (e.g., around a periphery of) an upper portion of a side surface 112 and an outermost portion of an upper surface 114 of the electrode assembly 110.

The first electrode includes a first substrate and a first active material layer on the first substrate. A first lead tab may extend outwardly from a first uncoated portion of the first substrate at where the first active material layer is not located, and the first lead tab may be electrically connected to the cap assembly. The second electrode includes a second substrate and a second active material layer on the second substrate. A second lead tab may extend outwardly from a second uncoated portion of the second substrate at where the second active material layer is not located, and the second lead tab may be electrically connected to the case. The first lead tab and the second lead tab may extend in opposite directions. The first electrode may act as a positive electrode. In such an embodiment, the first substrate may be made of, for example, an aluminum foil, and the first active material layer may include, for example, a transition metal oxide. The second electrode may act as a negative electrode. In such an embodiment, the second substrate may be made of, for example, a copper foil or a nickel foil, and the second active material layer may include graphite, for example.

The separator prevents a short circuit between the first electrode and the second electrode while allowing movement of lithium ions therebetween. The separator may be made of, for example, a polyethylene film, a polypropylene film, a polyethylene-polypropylene film, or the like.

The electrode assembly 110 may be formed in a cylindrical shape as illustrated in FIG. 1. The upper surface 114 of the electrode assembly 110 may refer to a surface that is in contact with the insulating plate. In some embodiments, the side surface 112 of the electrode assembly 110 may be a surface connecting the upper surface 114 and the lower surface opposite thereto of the electrode assembly 110 to each other. The upper surface 114 and the lower surface of the electrode assembly 110 may have a circular shape.

The insulating tape 120 may include a first region 120a attached to the side surface 112 of the electrode assembly 110, and a second region 120b protruding in the height direction of the electrode assembly 110. After the first region 120a of the insulating tape 120 is attached to the side surface 112 of the electrode assembly 110, the second region 120b may be attached to the upper surface 114 of the electrode assembly 110. In more detail, the first region 120a of the insulating tape 120 may be attached to the side surface 112 of the electrode assembly 110 by a device (e.g., an insulating tape 120 side attachment device), so that the electrode assembly 110a in which the first region 120a of the insulating tape 120 is attached to the side surface 112 may be formed. Subsequently, the second region 120b of the insulating tape 120, which protrudes in the height direction, may be bent along the perimeter of the upper surface 114 of the electrode assembly 110a. Thereafter, the second region 120b of the bent insulating tape 120 is attached to the upper surface 114 of the electrode assembly 110a, so that the electrode assembly 110b may be formed in which the first region 120a of the insulating tape 120 is attached to the side surface 112 and the second region 120b is attached to the upper surface 114.

According to an embodiment, the first region 120a and the second region 120b of the insulating tape 120 may have the same or substantially the same area as each other, and a boundary line between the first region 120a and the second region 120b may be formed to be in contact with the circumference of the upper surface 114 of the electrode assembly 110. For example, the width of the insulating tape 120 in the height direction may be 15 mm, and the height of the protruding portion (e.g., corresponding to the second region 120b) thereof may be 7.5 mm. For example, the length of the insulating tape 120 may be formed to be longer than the circumference of the upper surface 114 of the electrode assembly 110 by a suitable length (e.g., a predetermined length), such as, for example 10 mm.

The case accommodates the electrode assembly 110 and, together with the cap assembly, forms the external appearance of the secondary battery. The case may have a substantially cylindrical body portion and a bottom portion connected to one side (e.g., to one end) of the body portion. A beading part (e.g., a bead) deformed inwardly may be formed in the body portion, and a crimping part (e.g., a crimp) bent inwardly may be formed at an open end of the body portion.

The beading part can reduce or prevent movement of the electrode assembly 110 inside the case and can facilitate seating of the gasket and the cap assembly. The crimping part may firmly fix the cap assembly by pressing the edge of the case against the gasket. The case may be formed of iron plated with nickel, for example.

The cap assembly may be fixed to the inside of the crimping part by a gasket to seal the case. The cap assembly may include a cap up, a safety vent, a cap down, an insulating member, and a sub plate but is not limited thereto and may be modified in various ways.

The insulating plate may be positioned to be in contact with the electrode assembly 110 below the beading part. The insulating plate may have a tab opening through which the first lead tab is drawn out. The cap assembly, which is electrically connected to the first electrode by the first lead tab, may face the electrode assembly 110 with an insulating plate interposed therebetween and may maintain a state of being insulated (e.g., electrically insulated) from the electrode assembly 110 by the insulating plate.

The outer portion of the insulating plate on the inside of the bottom surface may have an uninsulated area of approximately 1.5 mm on one side thereof. This may cause the positive electrode substrate or the positive electrode current collector plate to contact the negative electrode portion of the can, resulting in a short circuit. According to some embodiments of the present invention, by including the insulating tape 120 as described above, the risk of exposure of the substrate and the current collector plate may be eliminated or reduced by the insulating tape 120 completely surrounding (e.g., around a periphery of) the edge portion of the electrode assembly 110.

Because the first region 120a of the insulating tape 120 may be first attached to the side surface 112 of the electrode assembly 110, wrinkles of the insulating tape 120 may be prevented or substantially prevented from occurring on the side surface 112. In some embodiments, an ease of insertion of the electrode assembly 110 into the secondary battery case may be improved, and the pressing of the substrate on the outside of the electrode assembly 110 may be prevented or substantially prevented. In a case where the insulating tape 120 is first attached to the upper surface 114 and then attached to the side surface 112 of the electrode assembly 110, it may be important to attach the insulating tape 120 to the center of the upper surface 114 of the electrode assembly 110, but the side tape attachment method as described above may be relatively free from the importance of such eccentricity.

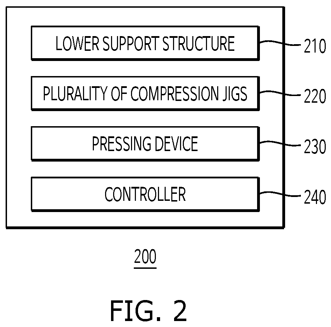

FIG. 2 illustrates a block diagram of a configuration of a tape attaching device 200 according to an embodiment of the present invention.

Referring to FIG. 2, the tape attaching device 200 may include a lower support structure 210, a plurality of compression jigs 220, a pressing device 230, and a controller 240.

The lower support structure 210 may support a cylindrical electrode assembly. For example, the lower support structure 210 may be in contact with a lower surface opposite to the upper surface of the electrode assembly. According to an embodiment, the lower support structure 210 may be formed to be in contact with a portion of the side surface of the electrode assembly, as well as the lower surface of the electrode assembly.

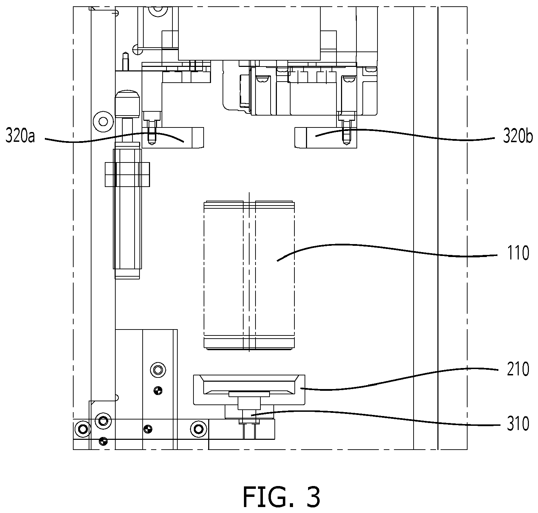

The compression jigs 220 may be attached to the side surface of the electrode assembly to bend the insulating tape protruding in the height direction along the circumference of the upper surface of the electrode assembly, and may attach the insulating tape to the upper surface of the electrode assembly. The compression jigs 220 may be moved by the controller 240, and in a case of being moved, may come into contact with the insulating tape of the second region protruding from the side surface of the electrode assembly. The shape of the end portion of the compression jigs 220 may have various suitable shapes, such as a circle, a triangle, and/or a curve, but the present invention is not limited thereto. The shape and operation of the compression jigs 220 will be described in more detail below with reference to FIG. 3 to FIG. 11.

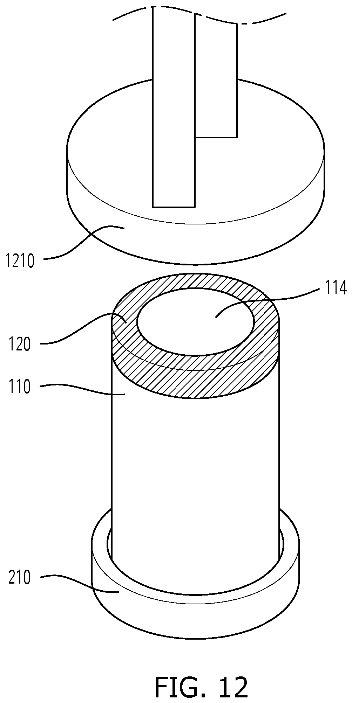

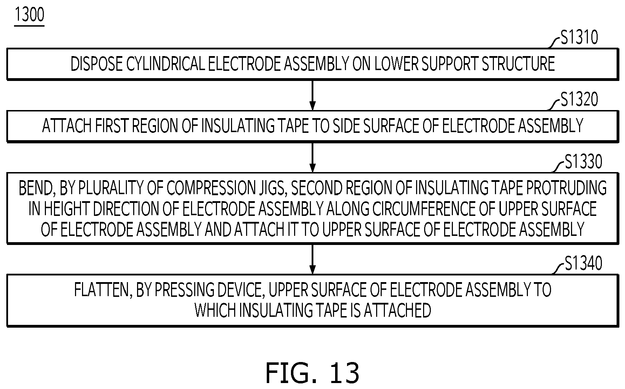

The pressing device 230 may be configured to flatten or substantially flatten the upper surface of the electrode assembly to which the insulating tape is attached. For example, the pressing device 230 may include a flat or substantially flat surface that presses the upper surface of the electrode assembly. In this case, the flat surface of the pressing device 230 may be wider than the upper surface of the electrode assembly. The pressing device 230 will be described in more detail below with reference to FIG. 12 and FIG. 13.

The controller 240 may control the compression jigs 220 and the pressing device 230. For example, the controller 240 may move the compression jigs 220 backward and forward to bend the second region of the insulating tape along the circumference of the upper surface of the electrode assembly. In some embodiments, the controller 240 may lower the compression jigs 220 to attach the second region of the bent tape to the upper surface of the electrode assembly. Additionally, the controller 240 may raise the compression jigs 220, may then rotate the compression jigs 220 or the lower support structure 210 at a desired angle (e.g., a predetermined angle), and may then lower the compression jigs 220 again. In some embodiments, the controller 240 may lower the pressing device 230 toward the center of the upper surface of the electrode assembly to apply a pressure to the second region of the insulating tape attached to the upper surface of the electrode assembly. The controller 240 may include an integrated circuit, a processor and memory, and/or the like.

FIG. 3 illustrates a side view of a tape attaching device according to an embodiment of the present invention. Referring to FIG. 3, an electrode assembly 110 having an insulating tape attached to a side surface thereof may be disposed between the compression jigs and the lower support structure 210.

The compression jigs may include a pair of compression jigs 320a and 320b, and the pair of compression jigs 320a and 320b may be disposed to face each other with respect to the upper surface of the electrode assembly 110. The pair of compression jigs 320a and 320b may be connected to the controller, and may move forward/rearward. The compression jigs may include a plurality of pairs of compression jigs 320a and 320b. For example, the compression jigs may include a pair of first compression jigs and a pair of second compression jigs.

In an embodiment, the lower support structure 210 may be formed to surround (e.g., around a periphery of) the lower end portion of the side surface of the electrode assembly 110, so as to fix the electrode assembly 110. The central axis of the electrode assembly 110 may coincide with the central axis of the lower support structure 210.

The lower support structure 210 may include a buffer member 310. The buffer member 310 may be formed at a lower end of the lower support structure 210, but the present invention is not limited thereto. For example, the buffer member 310 may be formed on the upper end of the lower support structure 210, the upper end of the compression jig, and/or the upper end of the pressing device. For example, the buffer member 310 may include a cylinder head.

As such, a desired pressure (e.g., a certain or predetermined pressure) may be maintained in the electrode assembly 110, while the pressing device and the compression jig are lowered to press the second region of the insulating tape attached to the upper surface of the electrode assembly 110, thereby preventing or substantially preventing damage to the electrode assembly 110. For example, the buffer member 310 may include a spring as a cushion device.

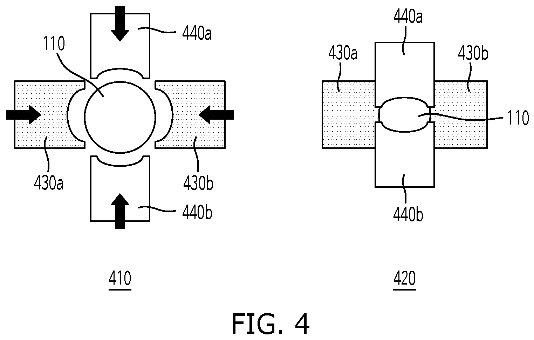

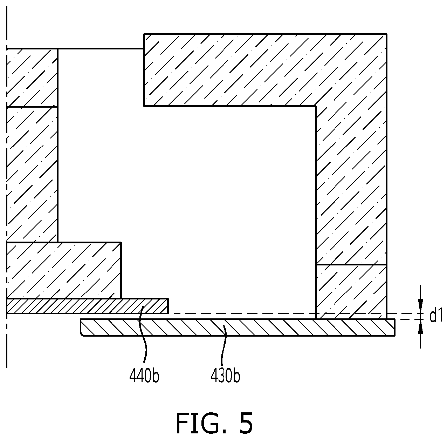

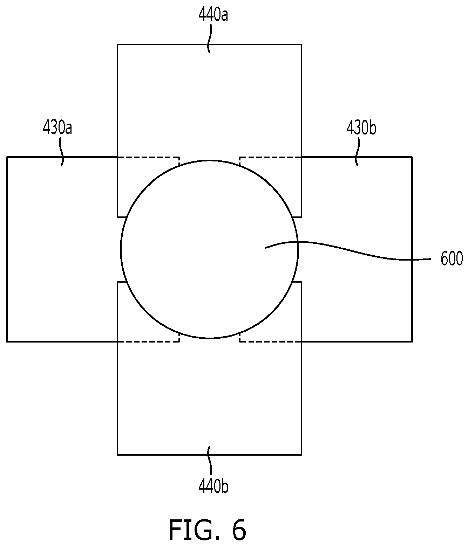

FIG. 4 illustrates a top view of a position state of a compression jig according to an embodiment of the present invention. FIG. 5 illustrates a separation distance d1 in a vertical direction between compression jigs according to an embodiment of the present invention. FIG. 6 illustrates a projection view of an end shape of a compression jig according to an embodiment of the present invention.

A plurality of compression jigs illustrated in FIG. 4, FIG. 5, and FIG. 6 are examples of the compression jigs described above with reference to FIG. 2. Referring to FIG. 4, the compression jigs may be moved between a forward position 420 and a backward position 410 by the controller.

The compression jigs may include a pair of first jigs 430a and 430b facing each other, and a pair of second jigs 440a and 440b facing each other. The moving directions of the pair of first jigs 430a and 430b may be opposite to each other, and the moving directions of the pair of second jigs 440a and 440b may also be opposite to each other. For example, the moving directions of the left first jig 430a and the right first jig 430b may be opposite to each other.

The forward position 420 may correspond to a position in which the compression jigs are moved and stopped in a central axis direction of the upper surface of the electrode assembly 110. For example, the moving directions of the pair of first jigs 430a and 430b and the pair of second jigs 440a and 440b may be perpendicular or substantially perpendicular to each other.

The backward position 410 may be a position at which each of the compression jigs moves in a direction opposite to the forward direction and stops. According to an embodiment, the compression jigs may move from the backward position 410 to the forward position 420 to bend the second region of the insulating tape. Thereafter, the compression jigs may be lowered from the forward position 420 to attach the second region of the insulating tape to the upper surface of the electrode assembly 110.

In an embodiment, the pair of first jigs 430a and 430b may be disposed at the same or substantially the same height as each other, and the pair of second jigs 440a and 440b may be disposed at the same or substantially the same height as each other. As an example, the pair of first jigs 430a and 430b may be spaced apart from each other by a suitable distance (e.g., a predetermined distance) from the forward position 420, and the pair of second jigs 440a and 440b may also be spaced apart from each other by a suitable distance (e.g., a predetermined distance) from the forward position 420. As another example, the pair of first jigs 430a and 430b may be in contact with each other at the forward position 420, and the pair of second jigs 440a and 440b may be spaced apart from each other by a suitable distance (e.g., a predetermined distance) from the forward position 420.

In some embodiments, the pair of first jigs 430a and 430b and the pair of second jigs 440a and 440b may be disposed at different heights from each other. In some embodiments, the pair of first jigs 430a and 430b and the pair of second jigs 440a and 440b may be disposed at the same or substantially the same height as each other.

Referring to FIG. 5, the pair of first jigs 430a and 430b may be spaced apart from the pair of second jigs 440a and 440b by a separation distance (e.g., a predetermined separation distance) d1 in the vertical direction. The vertical direction may be a direction perpendicular to or substantially perpendicular to the ground, and the horizontal direction may be a direction parallel to or substantially parallel to the ground. As illustrated in FIG. 4, the pair of first jigs 430a and 430b may not overlap with the pair of second jigs 440a and 440b in the vertical direction at the backward position 410. In some embodiments, the pair of first jigs 430a and 430b and the pair of second jigs 440a and 440b may at least partially overlap with each other in the vertical direction at the forward position 420. The separation distance d1 may be defined as a spacing between vertically overlapping jigs at the forward position 420. For example, it may be defined as the spacing between the upper surface of the first jig 430b and the lower surface of the second jig 440b vertically overlapping with each other. For example, the pair of first jigs 430a and 430b and the pair of second jigs 440a and 440b may be spaced apart from each other by less than 1 mm.

Referring to FIG. 6, the end portions of the pair of first jigs 430a and 430b and the end portions of the pair of second jigs 440a and 440b may have a curved shape. According to an embodiment, the end portions of the compression jigs are in contact with an imaginary circle 600 at the backward position 410, and the diameter of the imaginary circle 600 may be larger than the outer diameter of the upper surface of the electrode assembly.

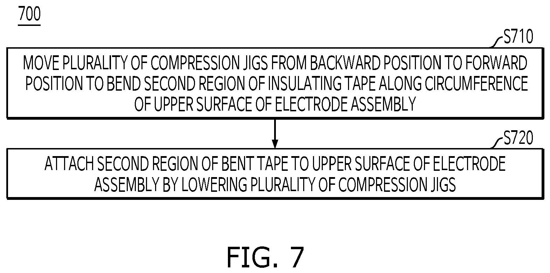

FIG. 7 illustrates a flowchart of a method for attaching a tape (e.g., a tape attaching method 700) using a compression jig according to an embodiment of the present invention. The tape attaching method 700 using the compression jig may include moving a plurality of compression jigs from a backward position to a forward position to bend a second region of an insulating tape along the circumference of the upper surface of the electrode assembly (S710).

The compression jigs may include a pair of first jigs facing each other, and a pair of second jigs facing each other. The pair of first jigs may be disposed at the same or substantially the same height as each other, and the pair of second jigs may be disposed at the same or substantially the same height as each other. In some embodiments, the pair of first jigs and the pair of second jigs may be disposed at different heights from each other. For example, a separation distance between the pair of first jigs and the pair of second jigs in the vertical direction may be within 1 mm.

In some embodiments, the end portions of the compression jigs may each be in contact with an imaginary circle at the backward position, and the diameter of the imaginary circle may be larger than the outer diameter of the electrode assembly.

Then, the compression jigs may be lowered to attach the second region of the bent tape to the upper surface of the electrode assembly (S720).

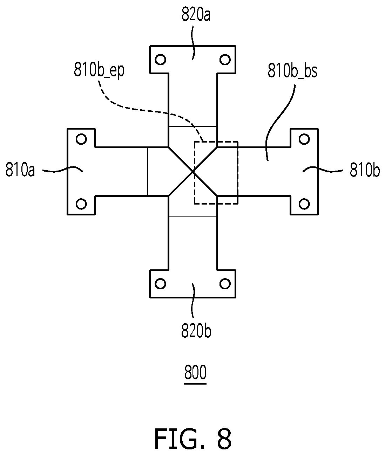

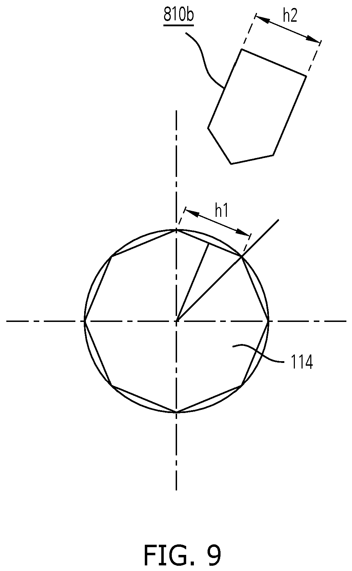

FIG. 8 illustrates a view of an end portion of a compression jig according to an embodiment of the present invention. FIG. 9 illustrates a view of a shape of a compression jig according to an embodiment of the present invention. A plurality of compression jigs 800 illustrated in FIG. 8 and FIG. 9 are examples of the compression jigs described above with reference to FIG. 2.

Referring to FIG. 8, a pair of first jigs 810a and 810b and a pair of second jigs 820a and 820b may have a lower surface 810b_bs facing the upper surface 114 of the electrode assembly. The lower surface 810b_bs of each compression jig may have one end directed toward the central axis of the electrode assembly, and another end opposite to the one end.

The compression jig may have an end portion 810b_ep including one end. The end portions of the compression jigs 800 may have an isosceles triangle shape, and may be formed in a shape in which the width of the compression jig in the horizontal direction decreases toward one end thereof.

The end portions of the lower surfaces 810b_bs of the compression jigs 800 facing the upper surface 114 of the electrode assembly may be formed to be inclined toward one end thereof. For example, the end portions of the lower surfaces of the pair of first jigs 810a and 810b may be formed to be inclined toward one ends of respective first jigs. As such, the portion that first contacts the second region of the insulating tape in the compression jig may be inclined, so that the insulating tape may be more easily bent along the compression jig.

According to an embodiment, the inclined surface that may be included on the lower surface of the first jig may have a pentagonal shape with two right angles. A point at which the inclined surface starts may be formed between the other end of the first jig at a point at which the width in the horizontal direction starts to decrease, and a point at which the inclined surface ends may be one end of the first jig. A boundary between the lower surface 810b_bs of the first jig and the inclined surface may be formed parallel to or substantially parallel to the horizontal direction of the first jig.

According to an embodiment, the pair of first jigs 810a and 810b and the pair of second jigs 820a and 820b may be disposed at the same or substantially the same height as each other, respectively. As a result, the end portions of each of the pair of first jigs 810a and 810b and the end portions of each of the pair of second jigs 820a and 820b may contact each other in a forward state.

Referring to FIG. 9, the end portion of the first jig 810b may have an isosceles triangle shape, and a horizontal width h2 of the first jig 810b may be 95% to 105% of a length h1 of one side of a regular octagon inscribed in the upper surface 114 of the electrode assembly. For example, in a case where the outer diameter of the upper surface 114 of the electrode assembly is about 44.6 mm, the length h1 of one side of the inscribed octagon may be 17.07 mm, and the horizontal width h2 of the first jig 810b may be 17.5 mm.

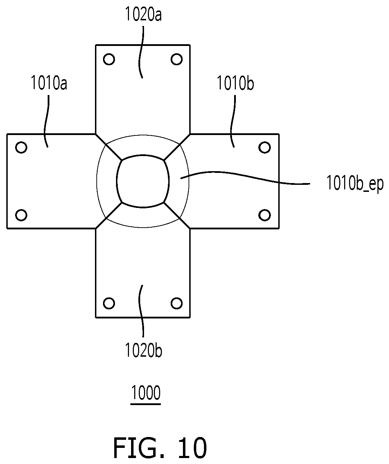

FIG. 10 illustrates an example of a compression jig according to an embodiment of the present invention. A plurality of compression jigs 1000 illustrated in FIG. 10 are examples of the compression jigs described above with reference to FIG. 2.

Referring to FIG. 10, the end portions of the compression jigs 1000 are each in contact with an imaginary circle at the forward position, and the diameter of the imaginary circle may be smaller than the outer diameter of the electrode assembly. For example, a pair of first jigs 1010a and 1010b and a pair of second jigs 1020a and 1020b may be in contact with the jigs on opposite sides in a forward state to form an imaginary shape (e.g., a circle, an ellipse, a polygon, a convex polygon, or the like) smaller than the outer diameter of the upper surface of the electrode assembly. According to an embodiment, the pair of first jigs 1010a and 1010b and the pair of second jigs 1020a and 1020b may be disposed at the same or substantially the same height as each other, respectively.

The end portions of the lower surfaces of the compression jigs 1000 facing the upper surface of the electrode assembly may be formed to be inclined toward one end thereof. For example, the end portion 1010b_ep of the lower surface of the first jig 1010b may be inclined toward one end of the first jig 1010b.

According to an embodiment, one end of the compression jigs 1000 may be formed in a curved shape. In some embodiments, the boundary between the lower surface and the inclined surface of the compression jigs 1000 may be formed in a curved shape. In this case, the end portions of the lower surfaces of the compression jigs 1000 may have a shape of a portion of a fan shape.

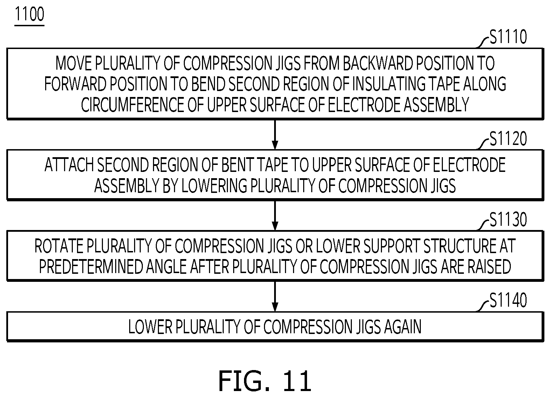

FIG. 11 illustrates a flowchart of a method for attaching a tape (e.g., a tape attaching method 1100) using a compression jig according to an embodiment of the present invention. The tape attaching method 1100 using the compression jig may include moving a plurality of compression jigs from a backward position to a forward position to bend a second region of an insulating tape along the circumference of the upper surface of the electrode assembly (S1110).

The end portions of the compression jigs may have an isosceles triangle shape, and the horizontal width of the compression jigs may be 95% to 105% of the length of one side of a regular octagon inscribed in the upper surface of the electrode assembly. As another example, the end portions of the compression jigs may each be in contact with an imaginary circle at the forward position, and the diameter of the imaginary circle may be smaller than the outer diameter of the electrode assembly. In some embodiments, the compression jigs may include a pair of first jigs facing each other, and a pair of second jigs facing each other, and the pair of first jigs and the pair of second jigs may be disposed at the same or substantially the same height as each other.

Then, the compression jigs may be lowered to attach the second region of the bent tape to the upper surface of the electrode assembly (S1120).

Then, after the compression jigs are raised, the compression jigs or the lower support structure may be rotated at an angle (e.g., a predetermined angle) (S1130). For example, a plurality of compression jigs, in which the compression jigs includes four jigs, or the lower support structure may be rotated 45 degrees. As such, the tape attaching device may include a driving portion for rotating the compression jigs or the lower support structure.

Thereafter, the compression jigs may be lowered again to perform a secondary compression (S1140). Through the configuration in which the primary compression using the compression jigs and the secondary compression after the rotation of the compression jigs are performed, the wrinkles of the tape attached to the upper surface of the electrode assembly may be effectively controlled.

FIG. 12 illustrates a perspective view of an example of a pressing device according to an embodiment of the present invention.

Referring to FIG. 12, the tape attaching device may include a pressing device 1210.

The pressing device 1210 may flatten the upper surface 114 of the electrode assembly 110 to which the insulating tape is attached. As an example, the lower portion of the pressing device 1210 may include a plate-shaped member disposed thereon. The pressing device 1210 may press the electrode assembly 110 to which the insulating tape 120 is attached to the upper surface 114 thereof in a vertical downward direction.

In a lowered state, the lower surface of the pressing device 1210 may be in contact with the upper surface of the electrode assembly 110 to which the insulating tape 120 is attached. The lower surface of the pressing device 1210 may have a circular shape.

The central axis of the lower surface of the pressing device 1210 may coincide with the central axis of the upper surface 114 of the electrode assembly 110, and the upper surface 114 of the electrode assembly 110 and the lower surface of the pressing device 1210 may be parallel to each other. The area of the lower surface of the pressing device 1210 may be larger than the area of the upper surface 114 of the electrode assembly 110.

To prevent or substantially prevent damage to the electrode assembly 110, the upper end of the pressing device 1210 or the lower end of the lower support structure 210 may include a buffer member so that a constant or substantially constant pressure may be applied. For example, a spring may be included at the lower end of the lower support structure and/or a cylinder head may be included at the upper end of the pressing device 1210.

FIG. 13 illustrates a flowchart of a method for attaching a tape (e.g., a tape attaching method 1300) according to an embodiment of the present invention.

The tape attaching method 1300 may include disposing a cylindrical electrode assembly on a lower support structure (S1310).

Then, the first region of the insulating tape may be attached to the side surface of the electrode assembly (S1320).

Next, the compression jigs may bend the second region of the insulating tape protruding in the height direction of the electrode assembly along the circumference of the upper surface of the electrode assembly, and attach it to the upper surface of the electrode assembly (S1330). For example, the compression jigs may move from the backward position to the forward position, may bend the second region of the insulating tape along the circumference of the upper surface of the electrode assembly, and may be lowered to attach the second region of the bent tape to the upper surface of the electrode assembly. Additionally/optionally, after the compression jigs are raised, the compression jigs or the lower support structure may be rotated at an angle (e.g., a predetermined angle), and the compression jigs may be lowered again to perform a secondary compression.

Afterwards, the pressing device may flatten the upper surface of the electrode assembly to which the insulating tape is attached (S1340).

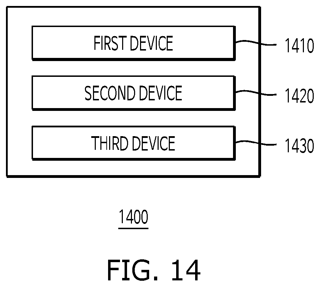

FIG. 14 illustrates a block diagram of a system 1400 for manufacturing a cylindrical battery (e.g., a cylindrical battery manufacturing system 1400) according to an embodiment of the present invention.

Referring to FIG. 14, a cylindrical battery manufacturing system 1400 may include a first device 1410, a second device 1420, and a third device 1430. The second device 1420 may be one of the above-described tape attaching devices.

The first device 1410 may provide a cylindrical electrode assembly including a first electrode, a second electrode, and a separator disposed between the first electrode and the second electrode.

The second device 1420 may attach an insulating tape to the electrode assembly. The second device 1420 may include a lower support structure for supporting the electrode assembly. The second device 1420 may include a plurality of compression jigs that bend the insulating tape, which may be attached to the side surface of the electrode assembly to protrude in the height direction, along the circumference of the upper surface of the electrode assembly, and may attach it to the upper surface of the electrode assembly. In some embodiments, the second device 1420 may include a pressing device for flattening the upper surface of the electrode assembly to which the insulating tape is attached. In an embodiment, the second device 1420 may include a controller that controls the first device 1410, the second device 1420, and the third device 1430. As another example, the cylindrical battery manufacturing system 1400 may include a controller for controlling the first device 1410, the second device 1420, and the third device 1430. The controller may include an integrated circuit, a processor and memory, and/or the like.

The third device 1430 may insert the electrode assembly to which the insulating tape is attached into a housing in which an opening is formed. In some embodiments, the cylindrical battery manufacturing system 1400 may further include an electrolyte injection device that injects an electrolyte into the housing, and a sealing device that seals the housing into which the electrolyte is injected.

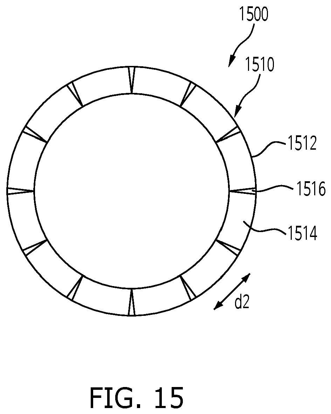

FIG. 15 illustrates a top view example of an electrode assembly 1500 to which an insulating tape 1510 is attached by a tape attaching device according to an embodiment of the present invention.

Referring to FIG. 15, a secondary battery may include an electrode assembly 1500 to which the insulating tape 1510 is attached by at least one of the tape attaching device, the tape attaching method, or the cylindrical battery manufacturing system described above with reference to FIGS. 2 through 14.

In an embodiment, the electrode assembly 1500 may have a cylindrical structure including a positive electrode, a negative electrode, and a separator interposed therebetween. The insulating tape 1510 may be attached to an outer circumferential surface of the electrode assembly 1500. The insulating tape 1510 may include a first region 1512 attached to a side surface of the electrode assembly 1500, and a second region 1514 bent inward from an outer periphery of an upper surface of the electrode assembly 1500 to be attached to the upper surface of the electrode assembly 1500. For example, the secondary battery may include the electrode assembly 1500 (e.g., the electrode assembly 110b described above with reference to FIG. 1) in which the first region 1512 (e.g., 120a of FIG. 1) of the insulating tape 1510 is attached to the side surface, and the second region 1514 (e.g., 120b of FIG. 1) is attached to the upper surface.

In an embodiment, no wrinkles may be formed in the insulating tape 1510 attached to the side surface of the cylindrical electrode assembly 1500. For example, the first region 1512 of the insulating tape 1510 attached to the side surface of the cylindrical electrode assembly 1500 may be free of wrinkles, and may be adhered in a state that is closely attached to the side surface of the electrode assembly 1500 along its entire or substantially entire area.

In an embodiment, the second region 1514 may include a plurality of wrinkles 1516 that is continuously formed along the outer periphery of the upper surface of the electrode assembly 1500. For example, the plurality of wrinkles 1516 may be formed at regular or irregular intervals by the plurality of compression jigs described above with reference to FIGS. 2 through 14.

In an embodiment, the wrinkles 1516 may have the same or similar shape with each other. For example, the wrinkles 1516 may be in the form of isosceles triangle-shaped protrusions. However, the present invention is not limited thereto, and the wrinkles 1516 may be alternatively formed in various other suitable shapes, such as rhombuses, semicircles, curved triangles, trapezoids, or parabolic shapes having a curvature radius.

In an embodiment, a variation in a spacing d2 between adjacent wrinkles 1516 may be maintained within 20%. For example, a deviation in the spacing d2 between adjacent wrinkles 1516 may range from 1% to 15%, 3% to 12%, 5% to 10%, 1% to 10%, 1% to 7%, or 3% to 5%. The deviation of the spacing d2 ranges may be adjusted based on the shape and control parameters of the compression jig, contributing to an improved consistency in a tape attachment quality and a precision of the process.

As such, a plurality of wrinkles 1516 may be formed on the upper surface of the electrode assembly 1500, while no wrinkles are formed on the side surface of the electrode assembly 1500, thereby improving an insertability of the electrode assembly 1500 into a can. In addition, this may prevent or substantially prevent a deformation or a pressing of the outer substrates of the electrode assembly 1500.

Although the present invention has been described above with respect to embodiments thereof, the present invention is not limited thereto. Various modifications and variations can be made thereto by those skilled in the art within the spirit of the present invention and the equivalent scope of the appended claims.

### Description of Some Reference Symbols

110: electrode assembly
110a: electrode assembly in which first region of insulating tape is attached to side surface thereof
110b: electrode assembly in which first region of insulating tape is attached to side surface thereof and second region of insulating tape is attached to upper surface thereof
112: side surface of electrode assembly
114: upper surface of electrode assembly
120: insulating tape
120a: first region of insulating tape
120b: second region of insulating tape

## Claims

1. A tape attaching device (200) comprising:
a lower support structure (210) configured to support a cylindrical electrode assembly (110);
a plurality of compression jigs (220) configured to bend an insulating tape (120) attached to a side surface (112) of the electrode assembly (110) and protruding in a height direction along a circumference of an upper surface (114) of the electrode assembly (110), and attach the insulating tape (120) to the upper surface (114) of the electrode assembly (110);
a pressing device (230) configured to flatten the upper surface (114) of the electrode assembly (110) to which the insulating tape (120) is attached; and
a controller (240) configured to control the compression jigs (220) and the pressing device (230).

2. The tape attaching device (200) as claimed in claim 1, wherein:
the compression jigs (220) comprise a pair of first jigs (430a, 430b, 810a, 810b, 1010a, 1010b) facing each other, and a pair of second jigs (440a, 440b, 820a, 820b, 1020a, 1020b) facing each other;
the pair of first jigs (430a, 430b, 810a, 810b, 1010a, 1010b) are located at the same height as each other; and
the pair of second jigs (440a, 440b, 820a, 820b, 1020a, 1020b) are located at the same height as each other.

3. The tape attaching device (200) as claimed in claim 2, wherein the pair of first jigs (430a, 430b, 810a, 810b, 1010a, 1010b) and the pair of second jigs (440a, 440b, 820a, 820b, 1020a, 1020b) are located at the same height as each other.

4. The tape attaching device (200) as claimed in claim 2, wherein the pair of first jigs (430a, 430b, 810a, 810b, 1010a, 1010b) are located at a different height from the pair of second jigs (440a, 440b, 820a, 820b, 1020a, 1020b).

5. The tape attaching device as claimed in claim 4, wherein a separation distance (d1) between the pair of first jigs (430a, 430b, 810a, 810b, 1010a, 1010b) and the pair of second jigs (440a, 440b, 820a, 820b, 1020a, 1020b) in a vertical direction is within 1 mm.

6. The tape attaching device (200) as claimed in any one of claims 1 to 5, wherein end portions (810b_ep) of lower surfaces (810b_bs) of the compression jigs (220) facing the upper surface (114) of the electrode assembly (110) are inclined toward one ends thereof.

7. The tape attaching device 200 as claimed in any one of claims 1 to 6,
wherein end portions (810b_ep) of the compression jigs (220) have an isosceles triangle shape, and
wherein a horizontal width (h2) of the compression jigs (220) is 95% to 105% of a length (h1) of one side of a regular octagon inscribed in the upper surface (114) of the electrode assembly (110).

8. The tape attaching device (200) as claimed in any one of claims 1 to 7, wherein:
the compression jigs (220) are configured to be moved between a backward position (410) and a forward position (420);
end portions (1010b_ep) of the compression jigs (220) contact around a diameter of an imaginary circle (600) at the forward position (420); and
the diameter of the imaginary circle (600) is smaller than an outer diameter of the electrode assembly (110).

9. The tape attaching device (200) as claimed in any one of claims 1 to 7, wherein:
the compression jigs (220) are configured to be moved between a backward position (410) and a forward position (420);
end portions of the compression jigs (220) contact around a diameter of an imaginary circle (600) at the backward position (410); and
the diameter of the imaginary circle (600) is larger than an outer diameter of the electrode assembly (110).

10. The tape attaching device (200) as claimed in any one of claims 1 to 9, wherein the lower support structure (210) comprises a buffer member (310), or the pressing device (230) comprises a buffer member (310).

11. The tape attaching device (200) as claimed in any one of claims 1 to 10, wherein:
the insulating tape (120) comprises:
a first region (120a) attached to the side surface (112) of the electrode assembly (110); and
a second region (120b) protruding in the height direction of the electrode assembly (110); and
the controller (240) is configured to:
move the compression jigs (220) from a backward position (410) to a forward position (420) to bend the second region (120b) of the insulating tape (120) along the circumference of the upper surface (114) of the electrode assembly (110); and
lower the compression jigs (220) to attach the second region (120b) of the insulating tape (120) that is bent to the upper surface (114) of the electrode assembly (110).

12. The tape attaching device (200) as claimed in claim 11, wherein the controller (240) is configured to raise the compression jigs (220), rotate the compression jigs (220) or the lower support structure (210) at an angle, and then lower the compression jigs (220).

13. A method (1300) for attaching a tape, comprising:
disposing (S1310) a cylindrical electrode assembly (110) on a lower support structure (210);
attaching (S1320) a first region (120a) of an insulating tape (120) to a side surface (112) of the electrode assembly (110);
bending (S1330), by a plurality of compression jigs (220), a second region (120b) of the insulating tape (120) protruding in a height direction of the electrode assembly (110) along a circumference of an upper surface (114) of the electrode assembly (110), and attaching the insulating tape (120) to the upper surface (114) of the electrode assembly (110); and
flattening (S1340), by a pressing device (230), the upper surface (114) of the electrode assembly (110) to which the insulating tape (120) is attached.

14. A secondary battery (1500) comprising:
a cylindrical electrode assembly (110, 1500); and
an insulating tape (120, 1510) attached to the electrode assembly (110, 1500) by a tape attaching device (200) comprising:
a lower support structure (210) configured to support the cylindrical electrode assembly (110, 1500);
a plurality of compression jigs (220) configured to bend the insulating tape (120, 1510) attached to a side surface (112) of the electrode assembly (110, 1500) and protruding in a height direction along a circumference of an upper surface (114) of the electrode assembly (110, 1500), and attach the insulating tape (120, 1510) to the upper surface (114) of the electrode assembly (110, 1500);
a pressing device (230) configured to flatten the upper surface (114) of the electrode assembly (110, 1500) to which the insulating tape (120, 1510) is attached; and
a controller (240) configured to control the compression jigs (220) and the pressing device (230).

15. The secondary battery (1500) as claimed in claim 14, wherein the insulating tape (120, 1510) comprises:
a first region (120a, 1512) attached to the side surface (112) of the electrode assembly (110, 1500); and
a second region (120b) bent inward from the circumference of the upper surface (114) of the electrode assembly (110, 1500), and attached to the upper surface (114),
wherein the second region (120b, 1514) comprises a plurality of wrinkles (1516) continuously located along the circumference of the upper surface (114) of the electrode assembly (110, 1500), and
wherein the first region (120a, 1512) of the insulating tape (120, 1510) is free of wrinkles.
